# EUROPEAN PATENT SPECIFICATION

(11) **EP 0 441 845 B1**
(45) Date of publication and mention of the grant of the patent: **15.12.1993**
(21) Application number: 89912358.2
(22) Date of filing: 19.10.1989
(51) Int. Cl.: B60T 8/26, B60T 11/34, B60T 17/22

(54) **PRIMARY AND SECONDARY PRESSURE-BALANCED PROPORTIONING VALVE**
VOM PRIMÄREN UND SEKUNDÄREN DRUCK AUSGEGLICHENES DOSIERVENTIL
SOUPAPE DE DOSAGE AVEC EQUILIBRAGE ENTRE LA PRESSION PRINCIPALE ET LA PRESSION SECONDAIRE

(30) Priority: 03.11.1988 US 266964
(43) Date of publication of application: 21.08.1991
(73) Proprietor: AlliedSignal Inc., Morristown, New Jersey 07962-2245 (US)
(72) Inventor: ZANDER, Richard, Anthony, Niles, MI 49120 (US); GAISER, Robert, Frank, Stevensville, MI 49127 (US); DILLON, William, Francis, Jr., South Bend, IN 46614 (US); CRUMB, Donald, Arthur, Granger, IN 46530 (US)
(74) Representative: Bentz, Jean-Paul
(86) International application number: US8904702
(87) International publication number: WO9005080

(56) References cited:
- EP-A- 0 097 545
- EP-A- 0 242 132
- WO-A-89/07539
- DE-A- 3 739 915
- US-A- 3 597 008
- US-A- 3 608 977

## Description

The present invention relates to a proportioning valve utilized in combination with a master cylinder, in particular a proportioning valve whose piston is actuated by fluid pressure received directly from the primary and secondary pressure chambers of the master cylinder.

In general, proportioning valves utilize a differential area piston in the secondary chamber brake system so that when a predetermined pressure level is reached, the piston shifts in the direction of the smaller area proportioning valve piston end. As the piston shifts, the piston contacts a poppet or seal and thus establishes a pressure restriction. Upon a further increase in secondary pressure communicated to the proportioning valve piston, the outlet pressure will rise at a rate determined by the differential areas at each end of the piston.

US-A-3 597 008 and 3 608 977 illustrate proportioning valve devices combined with warning switches.

A proportioning valve may be coupled with the master cylinder by means of a threaded connection. The proportioning valve includes a bypass function so that upon failure of pressure in a chamber of the master cylinder, the proportioning valve responds appropriately and permits fluid pressure to be-communicated freely to the rear brakes of the vehicle. Such existing designs contain numerous disadvantages such as: the primary and secondary pressure chambers of the master cylinder must be reversed which lengthens the master cylinder body; the master cylinder being stroke sensitive rather than pressure sensitive; the utilization of mechanical actuation instead of hydraulic actuation; numerous parts required for the assembly which results in high cost; and a bypass mechanism that is subject to many manufacturing tolerances and possibly subject to damage. It is highly desirable to provide a proportioning valve assembly with a bypass feature wherein it is not necessary to switch the position of the primary and secondary chambers in the master cylinder. It is also desirable to actuate the proportioning valve assembly by communicating directly pressure from the primary pressure chamber of the master cylinder to the proportioning valve assembly.

The present invention utilizes a differential area piston with one end of the piston acted upon directly by primary pressure received from the master cylinder. The other, larger diameter, end of the piston is acted upon directly by pressure received from the secondary chamber of the master cylinder. The secondary chamber fluid pressure is proportioned during actuation of the proportioning valve. The large diameter end of the piston is essentially pressure balanced after reaching the break point due to secondary outlet pressure acting on the larger diameter end and the primary pressure acting on the piston's small diameter end. Because the master cylinder primary and secondary pressures on the piston are essentially equal by utilizing the primary pressure to balance the proportioning valve piston, when the primary pressure fails the piston forces become unbalanced and thus shift the piston to a position wherein a bypass circuit is effected so that secondary pressure is communicated freely through the secondary outlet. US-A-3 597 008 discloses a proportioning valve that is not attached directly to the master cylinder, and which receives master cylinder pressure from a remote location. Unlike the present invention, the reciprocal actuating piston has a constant diameter blind bore receiving an end of the proportioning piston which results in a longer stroke of the actuating piston before the fluid bypass is effected, does not have containment of the seals about the end of the proportioning piston, and reentry of the seals into the blind bore can result in scruffing, cutting, or wearing of the seals.

The present invention comprises a proportioning valve in combination with warning means, the proportioning valve received in a bore having communication means for receiving fluid pressure communicated to the bore, the bore having at one end a first pressure receiving chamber and at the other end a second pressure receiving chamber, the second pressure receiving chamber having an outlet opening, a differential area piston disposed within said bore and having a first end received in the first pressure receiving chamber and a second end received in the second pressure receiving chamber, the first end having a seal (346) thereat in order to define a part of the primary pressure receiving chamber, the second end having first sealing means disposed thereat, the differential area piston comprising a first piston part and a second piston part, the first piston part having a blind bore with an end opening at the second piston part, the first piston part having an orifice communicating the blind bore with an intermediate chamber defined between said seal and second sealing means disposed at an opposite end of the first piston part, the second piston part having an extension extending into the blind bore, the extension having a seal member which controls fluid flow through a first opening in the extension, the first opening communicating with a longitudinal opening extending in said second piston part, the second piston part biased by resilient means toward said outlet opening, and warning means extending into the intermediate chamber to engage the first piston part, so that failure of pressure in one of the first and second pressure receiving chambers causes the first piston part to be displaced and effect operation of said warning means, characterized in that the end opening of the blind bore comprises an enlarged diameter area so that movement of said seal member into said enlarged diameter area permits fluid pressure to be communicated to said first opening, and the first piston part has an exterior which includes a circumferential groove thereabout, the warning means engaging the groove.

The invention is described in detail below with reference to the drawings which illustrate embodiments in which:
Figure 1 is a section view of a proportioning valve and master cylinder (not covered by the invention) ;
Figure 2 is a section view of a first embodiment (not covered by the invention) ;
Figure 3 is an enlarged section view of a portion of Figure 2 ;
Figure 4 is a section view of an alternative embodiment (not covered by the invention) ;
Figure 5 is a section view of a second alternative embodiment (not covered by the invention) ; and
Figure 6 is a section view of a third alternative embodiment.

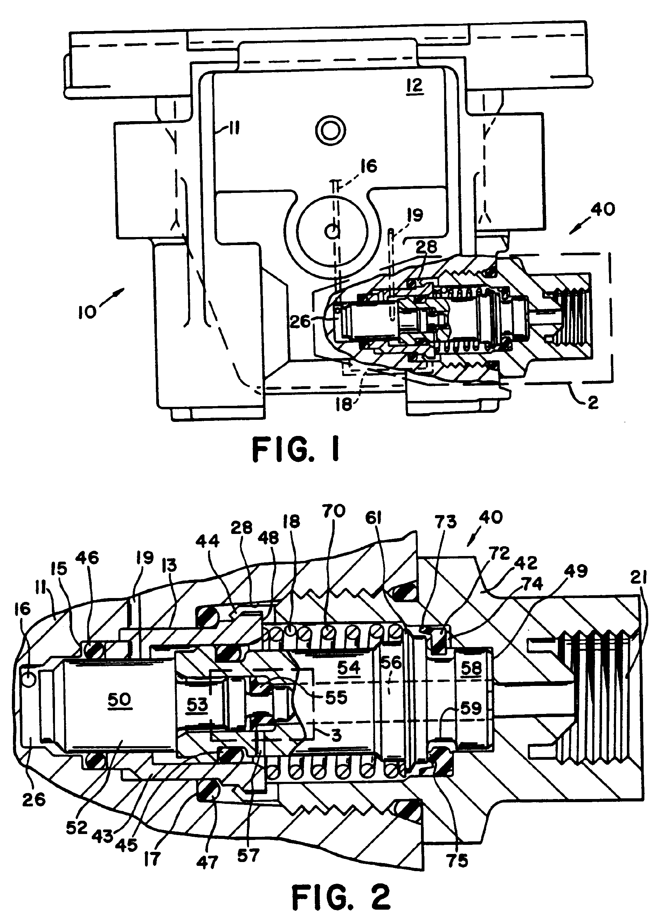

The master cylinder is designated generally by reference numeral 10 in Figure 1. The master cylinder is of the type designated "Recessed Cartridge Master Cylinder" and disclosed in U.S. Patent No. 4,474,005. It should be clearly understood that the present invention may be utilized with many other types of master cylinders, and is not restricted to use with just a Recessed Cartridge Master Cylinder. The master cylinder 10 includes a primary chamber (not shown) located interiorly of an end 12 and a secondary chamber (not shown) located interiorly of end 14. A passageway or communication means 16 extends from the primary chamber to a primary pressure receiving chamber 26 located within master cylinder housing 11. A passageway or communication means 18 extends between the secondary pressure chamber and a secondary pressure receiving chamber 28 located within housing 11. A vent 19 may extend to either atmosphere or to a reservoir (not shown) of the master cylinder. The proportioning valve assembly is designated generally by reference numeral 40 and comprises a valve housing part 42 received threadably in transverse bore 13 of housing 11. Bore 13 comprises a stepped bore which extends from the primary pressure receiving chamber 26 to the secondary pressure receiving chamber 28. Proportioning valve assembly 40 includes a valve housing part 43 clasped to first housing part 42 by means of a flange 44. Stepped bore 13 provides a shoulder 15 for engagement by a seal 46 disposed about differential area piston 50. Differential area piston 50 includes a first piston part 52 and second piston part 54. First piston part 52 includes an extension 53 received within a through opening 56 of second piston part 54. Extension 53 includes a seal 55 disposed thereabout, the seal blocking fluid flow between a radial opening 57 and through opening 56 in second piston part 54. The second piston part 54 has a seal 45 disposed thereabout and engaging the interior of second housing part 43. Resilient means 70 extends between a second housing shoulder 48 and a flange 61 of second piston part 54. A seal 47 is disposed about the exterior of second housing part 43 and engages a shoulder 17 of housing 11. The second piston part 54 has an end 58 which abuts shoulder 49 of housing part 42. Piston end 58 includes sealing means 72 disposed thereabout. Sealing means 72 has a flexible pumping arm 73, radial passageways 74, and spaced apart circumferential abutments 75. The interior diameter of resilient sealing means 72 is spaced radially apart from the exterior surface of circumferential groove 59 of piston second part 54. Each of the seals disposed about the exterior of assembly 40 is a static seal which engages a portion of stepped bore 13 when valve assembly 40 is threadably received within housing 11.

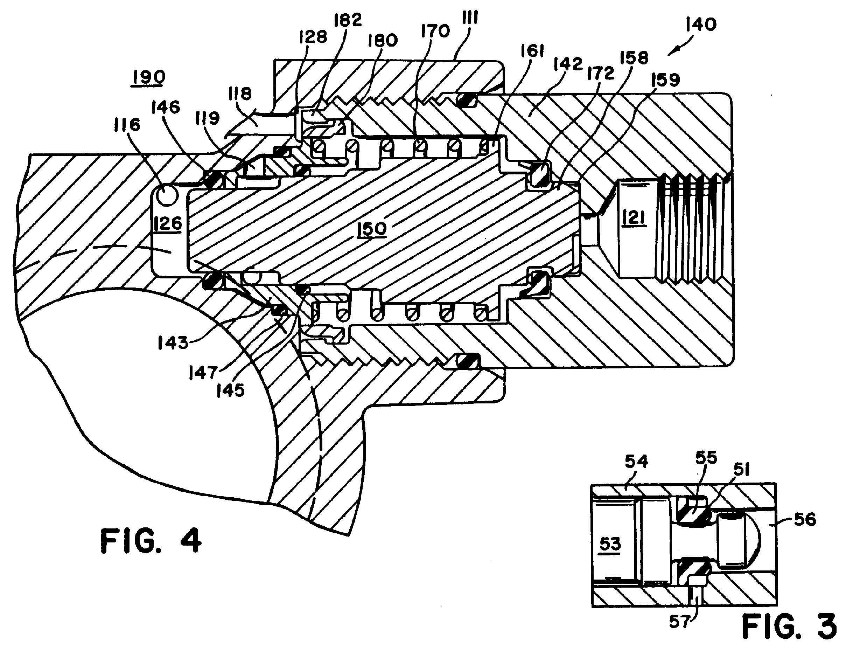

Proportioning valve assembly 40 is shown in an at-rest position. When master cylinder 10 is actuated by the vehicle operator depressing the brake pedal of the vehicle, primary and secondary chamber fluid pressure is communicated by means of passageways 16 and 18 to the respective pressure receiving chambers 26 and 28. Because of the diameters of differential area piston 50, the secondary pressure displaces piston 50 slightly toward the left in Figure 1, against the force of resilient means 70 and the primary fluid pressure in chamber 26 acting upon first piston part 52. Upon an increase of fluid pressures received in chambers 26 and 28, piston 50 is displaced to the left until the outer diameter of piston end 58 engages sealing means 72. This causes a restriction or metering of fluid pressure communicated between passageway 18, pressure-receiving chamber 28, and secondary outlet 21. It should be noted that prior to the leftward movement of the piston 50, the abutments 75 on sealing means 72 ensures that fluid pressure is free to pass between the interior diameter of sealing means 72 and circumferential groove 59 to the secondary outlet 21. As shown in greater detail in Figure 3, seal 55 has a generally L-shaped section and engages shoulder 51 of second piston part 54. Seal 55 avoids contact with radial opening 57 so that opening 57 cannot cut or gouge out parts of seal 55. Thus, sealing is accomplished at shoulder 51 so that fluid does not flow through opening 56. Should there be a failure of pressure in the primary chamber of master cylinder 10, an unbalancing of forces is created and first piston part 52 moves immediately leftward in chamber 26 which causes extension 53 to move seal 55 out of sealing engagement with shoulder 51. This permits fluid pressure within secondary pressure receiving chamber 28 to be communicated through radial opening 57 and through opening 56 to outlet 21 so that a bypass function is accomplished and full braking pressure may be communicated to the rear brakes of the vehicle. As a result of communicating the master cylinder primary chamber pressure directly to the differential area piston of the proportioning valve assembly, there is no longer required the utilization of primary pressure to indirectly effect a bypass by means of other intermediate mechanisms. The fluid pressure from the primary chamber of the master cylinder acts directly upon the proportioning valve piston to eliminate any need for reversing the primary and secondary chambers of the master cylinder. No external mechanical mechanisms are required in order to actuate the proportioning valve assembly and effect the bypass function. The primary pressure is required for operation of the proportioning valve assembly. However, should there be a failure of fluid pressure in the primary braking circuit, the proportioning valve assembly actuates immediately to effect the bypass feature and permit the direct communication of full fluid pressure to secondary outlet 21 and the rear brakes of the vehicle.

Figure 4 illustrates an alternative embodiment, and similar structure is indicated by the same reference numeral increased by 100. The piston 150 comprises a single part, integral piston having disposed thereabout a sleeve or second housing part 143 which includes a flange 180 which snaps together with flange 182 of first housing part 142. The vent 119 communicates with either the reservoir 190 or with atmosphere. Proportioning valve assembly 140 operates as described above except that upon failure of fluid pressure in the primary chamber of the master cylinder and primary pressure-receiving chamber 126, the entire piston 150 moves to the left in Figure 4 and displaces end 158 through the interior diameter of sealing means 172. Fluid pressure in secondary pressure receiving chamber 126 may then communicate past the inside diameter of sealing means 172 and through slots 159 of piston 150 to secondary outlet 121.

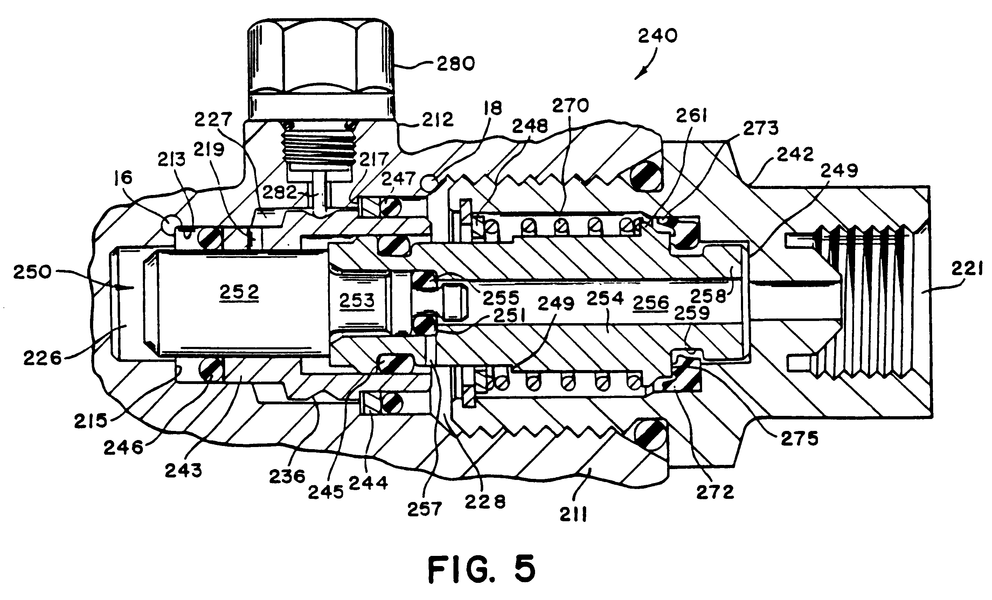

Figure 5 illustrates a second alternative embodiment, and similar structure is indicated by the same reference numeral increased by 100. The embodiment of Figure 5 may be utilized with the master cylinder 10 described above, wherein the passageway or communication means 16 extends from the primary chamber to a primary pressure receiving chamber 226 located within the master cylinder housing 211. A passageway or communication means 18 extends between the secondary pressure chamber and a secondary pressure receiving chamber 228 located within housing 211. The proportioning valve assembly is designated generally by reference numeral 240 and comprises a valve housing part 242 received threadably in transverse bore 213 of housing 211. Bore 213 comprises a stepped bore which extends from the primary pressure receiving chamber 226 to the secondary pressure receiving chamber 228. Stepped bore 213 provides a shoulder 215 for engagement by a movable seal 246 disposed about differential area piston 250. Differential area piston 250 includes a first piston part 252 and a second piston part 254. First piston part 252 includes an extension 253 received within a through opening 256 of second piston part 254. Extension 253 includes a seal 255 disposed thereabout, the seal blocking fluid flow between a radial opening 257 and through opening 256 in second piston part 254. Second piston part 254 has an interior seal 245 disposed thereabout and engaging the interior of differential area sleeve 243. Differential area sleeve 243 is disposed about interfitted ends of first piston part 252 and second piston part 254. Sleeve 243 abuts and effects movement of movable seal 246 disposed about first piston part 252. Sleeve 243 includes an exterior recessed abutment area 236 which receives a probe 282 of warning switch mechanism 280. Differential area sleeve 243 also includes thereabout a ring 244 which abuts seal 247 and a housing shoulder 217. Warning switch mechanism 280 is disposed within housing 211 and probe 282 extends into an intermediate chamber 227 defined between movable seal 246 and seal 247 disposed about the exterior of sleeve 243 and engaging bore 213. Resilient means 270 extends between a housing shoulder 248 and a flange 261 of second piston part 254. Second piston part 254 has an end 258 which abuts shoulder 249 of housing 242. Piston end 258 includes sealing means 272 disposed thereabout. Sealing means 272 has a flexible pumping arm 273 and spaced apart circumferential abutments 275. The interior diameter of sealing means 272 is spaced radially apart from the exterior surface of circumferential groove 259 of piston second part 254.

Proportioning valve assembly 240 is shown in an at rest position. When master cylinder 10 is actuated by the vehicle operator depressing the brake pedal of the vehicle, primary and secondary chamber fluid pressure is communicated by means of passageways 16 and 18 to the respective pressure receiving chambers 226 and 228. Because of the respective diameters of the first piston part 252 and second piston part 254, the secondary pressure displaces piston 250 slightly toward the left in Figure 5, against the force of resilient means 270 and the primary fluid pressure in chamber 226 acting upon first piston part 252. Upon an increase of fluid pressures received in chambers 226 and 228, piston 250 is displace to the left until the outer diameter of piston end 258 engages sealing means 272. This causes a restriction or metering of fluid pressure communicated between passageway 18, receiving chamber 228, and secondary outlet opening 221. It should be noted that prior to the left ward movement of piston 250, the abutments 275 on sealing means 272 ensures that fluid pressure is free to pass between the interior diameter of sealing means 272 and the circumferential groove 259 of secondary outlet opening 221. Seal 255 disposed about extension 253 seals the passageway 257 so that secondary pressure received within secondary pressure receiving chamber 228 cannot enter through opening 256. Should there be a failure of pressure in the primary chamber of master cylinder 10, an unbalancing of forces is created and first piston part 252 moves immediately leftward in chamber 226 along with leftward displacement of second piston part 254. Second piston part 254 moves leftward until shoulder 249 abuts the housing shoulder 248 and stops movement thereof. The first piston part 252 continues to move leftward and the extension 253 moves the seal 255 out of sealing engagement with the shoulder 251 of second piston part 254. This permits fluid pressure within secondary pressure receiving chamber 228 to be communicated through radial opening 257 and through opening 256 to outlet opening 221 so that a bypass function is accomplished and full braking pressure may be communicated to rear brakes of the vehicle. Concurrent with the movement of the respective piston parts 252 and 254, the differential area sleeve 243 is sensitive to the unbalancing of pressure between chambers 226 and 228, so that differential area sleeve 243 moves leftward and causes probe 282 to be biased upwardly and actuate warning switch mechanism 280. Likewise, if there is a failure of pressure within secondary pressure receiving chamber 228, sleeve 243 will be displaced to the right and cause actuation of warning switch mechanism 280. Differential area sleeve 243 is utilized as a warning switch piston which is able to detect differential pressure. The detection of a predetermined differential pressure between the chambers 226 and 228 results in the actuation of the warning switch 280. By having mechanism 280 and sleeve 243 disposed within master cylinder 10 via internal porting, there is eliminated the necessity of primary and secondary pressure lines from the master cylinder outlets to be directed to a separate warning mechanism. The differential area sleeve serves as a spool concentric with first piston part 252. Sleeve 243 provides first piston part 252 with a bore for receiving piston part 252, and also enables the positioning of seal 246 about part 252. Because of the integration of warning switch mechanism 280 with proportioning valve 240, the basic master cylinder die cast body can, with minimal machining, provide at the outlet opening 221: (1) secondary pressure only (unregulated), (2) proportioned outlet pressure, (3) proportioned outlet pressure with pressure differential warning, and (4) pressure differential warning only.

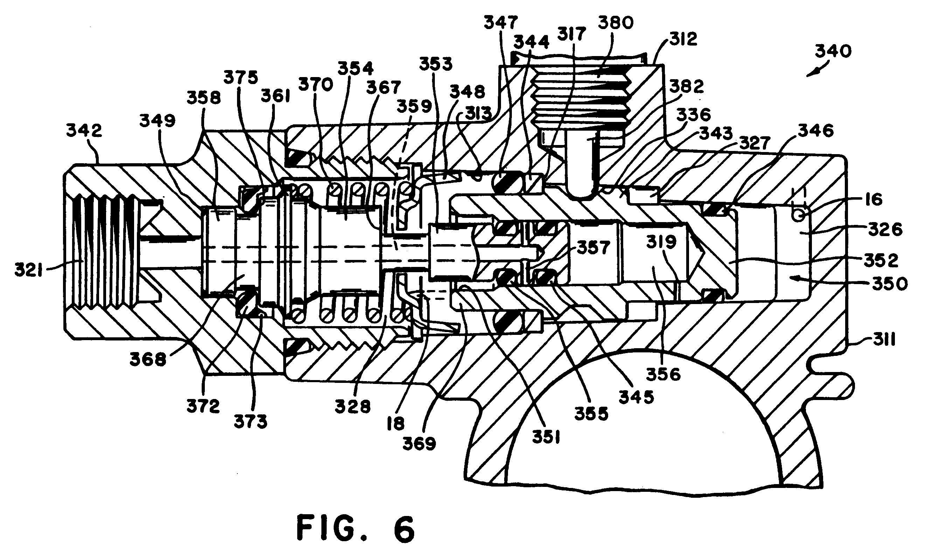

Figure 6 illustrates a third alternative embodiment, and similar structure is indicated by the same reference numeral increased by 100. The embodiment of Figure 6 may be utilized with the master cylinder 10 described above, wherein the passageway or communication means 16 extends from the primary chamber to a primary pressure-receiving chamber 326 located within master cylinder housing 311. A passageway or communication means 18 extends between the secondary pressure chamber and a secondary pressure-receiving chamber 328 located within housing 311. The proportioning valve assembly is designated generally by reference numeral 340 and comprises a valve housing part 342 received threadedly in transverse bore 313 of housing 311. Bore 313 comprises a stepped bore which extends from the primary pressure-receiving chamber 326 to the secondary pressure chamber 328. Stepped bore 313 provides a shoulder 317 for engagement by a ring 344 and seal 347 disposed about differential area piston 350. Differential area piston 350 includes a first piston part 352 and a second piston part 354. First piston part 352 includes a blind bore 356 which communicates with an opening 351 located at end 369. Blind bore 356 includes an orifice 319. Disposed about the opposite end of first piston part 352 is a movable seal 346. The seals 346, 347 define therebetween an intermediate vented chamber 327. Second piston part 354 includes an extension 353 received within blind bore 356 of first piston part 352. Extension 353 includes a longitudinal opening 359 extending from end 358 to the end of extension 353 received in blind bore 356. Extension 353 includes seals 355 and 345 disposed thereabout, the seals having therebetween radial openings 357. Radial openings 357 communicate with longitudinal opening 359. The seal 355 is disposed adjacent an enlarged diameter section of bore opening 351, whereby seal 355 controls fluid pressure flow into openings 357. First piston part 352 includes an exterior differential area portion 343 having a circumferential groove 336 that provides an abutment for probe 382 of warning switch mechanism 380. Differential area portion 343 also provides a shoulder for abutment by ring 344. Warning switch mechanism 380 is disposed within housing boss 312 and probe 382 enters into intermediate vented chamber 327 defined between movable seals 346 and 347 which engage the first piston part 352 and stepped bore 313. Resilient means 370 extends between a retainer member 348 and a shoulder 361 of second piston part 354. Second piston part 354 includes the end 358 which abuts shoulder 349 of housing part 342. Second piston end 358 includes sealing means 372 disposed thereabout. Sealing means 372 has a flexible pumping arm 373 and spaced-apart circumferential abutments 375. The interior diameter of sealing means 372 is spaced radially apart from the exterior surface of circumferential groove 368 of second piston part 354. The radial openings 357 and longitudinal opening 359 communicate with the secondary outlet 321.

Proportioning valve assembly 340 is shown in an at-rest position. The master cylinder 10 is actuated by the vehicle operator depressing the brake pedal of the vehicle, whereby primary and secondary chamber fluid pressure is communicated by means of passageways 16 and 18 to their respective pressure-receiving chambers 326 and 328. Because of the respective diameters of second piston part 354, the secondary pressure displaces second piston part 354 slightly toward the right in Figure 6, against the force of resilient means 370. Upon an increase of fluid pressure received in chamber 328, second piston part 354 is displaced to the right and the outer diameter of piston end 358 approaches sealing means 372. This causes a restriction or metering of fluid pressure communicated between passagway 18, receiving chamber 328, and secondary outlet opening 321. It should be noted that prior to the rightward movement of second piston part 354, the abutments 375 on sealing means 372 ensure that fluid pressure is free to pass between the interior diameter of sealing means 372, through circumferential groove 368 and to secondary outlet opening 321. Seal 355 disposed about the extension 353 prevents the communication of fluid pressure into openings 357 so that secondary pressure received within secondary pressure receiving chamber 328 must be communicated past sealing means 372. Should there be a failure of pressure in the primary chamber of master cylinder 10, an unbalancing of forces is created and first piston part 352 moves immediately rightward in chamber 326 along with rightward displacement of second piston part 354. Second piston part 354 moves rightward until shoulder 367 abuts retainer 348 and stops movement thereof. The first piston part 352 continues to move rightward and extension 353 (which is stationary) moves seal 355 out of sealing engagement with the smaller diameter section of blind bore 356 and into the enlarged diameter area at opening 351. This permits fluid pressure within secondary pressure receiving chamber 328 to be communicated through radial openings 357 and longitudinal opening 359 to outlet opening 321 so that a bypass function is accomplished and full braking pressure may be communicated to the rear brakes of the vehicle. Concurrent with the movements of the respective piston parts 352 and 354, the differential area portion 343 is sensitive to the unbalancing of pressure between chambers 326 and 328, so that differential area portion 343 moves rightward due to primary chamber pressure failure and causes probe 282 to be biased upwardly and actuate warning switch mechanism 380. Likewise, if there is a failure of pressure within secondary pressure receiving chamber 328, sleeve 343 will be displaced to the left and cause actuation of warning switch mechanism 380. Differential area portion 343 is utilized as a warning switch actuation mechanism which is able to detect differential pressure. The detection of a predetermined differential pressure between chambers 326 and 328 results in the actuation of warning switch mechanism 380. By having mechanism 380 and differential area portion 343 disposed within master cylinder 10 via internal porting, there is eliminated the necessity of primary and secondary pressure lines from the master cylinder outlets being directed to a separate warning mechanism.

The proportioning valve 340 combined with the warning switch mechanism 380 provides substantial advantages over such prior combinations. First, there is provided a through-the-center bypass and secondary fluid pressure bypass mechanism wherein the failure of fluid pressure within the primary chamber of the master cylinder causes secondary brake fluid pressure to be communicated directly, via the through-the-center bypass channel, to the rear brakes of the vehicle. The integration of a movable sleeve for actuating the warning switch mechanism with the first piston part 352 enables intermediate vented chamber 327 to be utilized both for the positioning of probe 382 of warning switch mechanism 380 and for the necessary venting of blind bore 356 by means of orifice 319. Prior proportioning valve structures have suffered from the problem of the second piston end 358 hitting the shoulder 349 with a resounding and audible "thunk" at the end of the release phase of braking. At the end of the release phase of braking, the pressure at secondary outlet 321 decreases substantially to the point that the pressure at outlet 321 exerted against end 358 is less than the force of spring 370 against shoulder 361 of second piston part 354. This results in the second piston part moving rapidly to the left and causing the "thunk" noise. In order to eliminate this, blind bore 356 is a stepped blind bore which has a predetermined reduced diameter size along with a predetermined orifice size for orifice 319. As a result, when second piston part 354 moves leftward at the end of the release phase of braking, the velocity of the leftward movement of second piston part 354 is reduced because of the restriction of the flow of atmosphere or fluid from intermediate vented chamber 327 through orifice 319 into stepped blind bore 356. Thus, the "thunk" noise is effectively eliminated and the leftward movement of second piston part 354 can be altered accordingly by varying the size of blind stepped bore 356 and orifice 319. Additionally, the first piston part 352 which includes the differential area portion 343 that actuates warning switch mechanism 380, provides a warning switch mechanism that is subject only to the inlet pressures of the primary and secondary pressure-receiving chambers. This is important because in many prior proportioning valve and warning switch combinations, the warning switch mechanism has been exposed to pressure and volume changes at the secondary pressure chamber outlet. The pressure and fluid volume at the secondary outlet, such as outlet 321, can be quite different than the pressure and volume contained within secondary pressure-receiving chamber 328. The pressures contained and communicated to the primary and secondary pressure-receiving chambers 326 and 328 proceed along the slopes of the respective output curves, while the pressure at the secondary outlet 321 may proceed along its own output curve which has a different slope. Therefore, warning switch mechanisms which are subjected to the different pressure output curve corresponding to the pressure and volume changes at the secondary outlet can result in a warning switch mechanism that does not operate satisfactorily or as predicted. The present invention avoids this structural and functional defect by providing a warning switch mechanism that is activated by a differential area portion subjected only to the pressures in the primary and secondary pressure-receiving chambers, and is not subjected to the pressure at the secondary outlet 321.

The proportioning valve assembly and master cylinder of the present invention comprises a substantial improvement over prior constructions. Because the primary chamber fluid pressure is utilized to actuate and operate directly the proportioning valve assembly, intermediate mechanisms and devices and reversal of the pressure chambers of the master cylinder are obviated. An additional advantage is that the proportioning valve assembly and master cylinder permit the communication of greater fluid pressure to the rear brakes of the vehicle when such can be tolerated. In other words, the break point on the pressure curve may be led or lagged according to design modification. In actual operation, the fluid pressures communicated from the primary and secondary chambers of the master cylinder are slightly different, in the magnitude of approximately 20 to 30 psi. The fluid pressure variance communicated from the primary pressure chamber of the master cylinder is approximately 20 to 30 psi. lower than the fluid pressure communicated from the secondary pressure chamber. This is a result of difference in spring loads and seal friction. Thus, during actual braking, the front brakes of the vehicle receive slightly less pressure than the rear brakes of the vehicle receive initially. Therefore, the front brakes are slightly less effective and there is not a shifting of the load off the rear wheels, i.e., the rear portion of the vehicle does not tilt to the extent that it might if the pressures transmitted from the primary and secondary pressure chambers were actually equal. Because of reduced tilting of the vehicle, the rear wheels of the vehicle can tolerate more fluid pressure. In the present invention, the initial slight leftward movement of the differential area piston allows a greater amount of pressure to the rear brakes. This effects a raising of the break-point of the characteristic output pressure curve.

## Claims

1. A proportioning valve in combination with warning means, the proportioning valve (340) received in a bore (313) having communication means (16, 18) for receiving fluid pressure communicated to the bore (313), the bore (313) having at one end a first pressure receiving chamber (326) and at the other end a second pressure receiving chamber (328), the second pressure receiving chamber (328) having an outlet opening (321), a differential area piston (350) disposed within said bore (313) and having a first end (352) received in the first pressure receiving chamber (326) and a second end (354) received in the second pressure receiving chamber (328), the first end (352) having a seal (346) thereat in order to define a part of the primary pressure receiving chamber (326), the second end (354) having first sealing means (372) disposed thereat, the differential area piston (350) comprising a first piston part (352) and a second piston part (354), the first piston part (352) having a blind bore (356) with an end opening (351) at the second piston part (350), the first piston part (352) having an orifice (319) communicating the blind bore (356) with an intermediate chamber (327) defined between said seal (346) and second sealing means (344, 347) disposed at an opposite end (369) of the first piston part (352), the second piston part (354) having an extension (353) extending into the blind bore (356), the extension (353) having a seal member (355) which controls fluid flow through a first opening (357) in the extension (353), the first opening (357) communicating with a longitudinal opening (359) extending in said second piston part (354), the second piston part (354) biased by resilient means (370) toward said outlet opening (321), and warning means (380) extending into the intermediate chamber (327) to engage the first piston part (352), so that failure of pressure in one of the first and second pressure receiving chambers (326, 328) causes the first piston part (352) to be displaced and effect operation of said warning means (380), characterized in that the end opening (351) of the blind bore (356) comprises an enlarged diameter area (351) so that movement of said seal member (355) into said enlarged diameter area (351) permits fluid pressure to be communicated to said first opening (357), and the first piston part (352) has an exterior which includes a circumferential groove (336) thereabout, the warning means (380) engaging the groove (336).

2. The proportioning valve and warning means in accordance with claim 1, wherein the circumferential groove (336) comprises abutment means that provides a shoulder for engagement by said second sealing means (344, 347).

3. The proportioning valve and warning means in accordance with claim 1, further comprising a retainer member (348) disposed about said second piston part (354), the retainer member (348) providing a seat for said resilient means (370).

4. The proportioning valve and warning means in accordance with claim 1, wherein the blind bore (356) in the first piston part (352) and the orifice (319) are sized so that the velocity of movement of the extension (353) out of the blind bore (356) is reduced during a release phase of braking.

5. The proportioning valve and warning means in accordance with claim 1, wherein the longitudinal opening (359) in the second piston part (354) comprises a bore (359) extending from the outlet opening (321) to the first opening (357).

6. The proportioning valve and warning means in accordance with claim 5, wherein the first opening (357) comprises a radial opening (357).

7. The proportioning valve and warning means in accordance with claim 6, wherein the second piston part (354) comprises a differential area piston (354) disposed opposite the extension (353) so that the second piston part (354) is displaced laterally by fluid pressure in order to proportion the communication of fluid pressure past said first sealing means (372), said first piston part (352) remaining stationary during normal operation and displaced when one of the primary and secondary receiving chamber (326, 328) pressures fails.

## Patentansprüche

1. Druckregelventil in Verbindung mit Warnmitteln, wobei das in einer Bohrung (313) aufgenommene Druckregelventil (340) eine Strömungsverbindung (16, 18) für den Empfang von der Bohrung (313) zugeführtem Strömungsmitteldruck aufweist, die Bohrung (313) an einem Ende eine primäre druckempfangende Kammer (326) und am anderen Ende ein sekundäre druckempfangende Kammer (328) aufweist, die sekundäre druckempfangende Kammer (328) mit einer Auslaßöffnung (321) versehen ist, ein Stufenkolben (350) innerhalb der Bohrung (313) angeordnet ist und mit einem Ende (352) von der primären druckempfangenden Kammer (326) und mit einem zweiten Ende (354) von der sekundären druckempfangenden Kammer (328) aufgenommen wird, das erste Ende (352) eine Dichtung (346) aufweist, um einen Teil der primären druckempfangenden Kammer (326) zu bilden, das zweite Ende (354) daran angeordnete erste Dichtungsmittel (372) aufweist, der Stufenkolben (350) einen ersten Kolbenteil (352) und einen zweiten Kolbenteil (354) aufweist, der erste Kolbenteil (352) eine Sackbohrung (356) mit einer Endöffnung (351) an dem zweiten Kolbenteil (350) aufweist, der erste Kolbenteil (352) eine Öffnung (319) aufweist, die die Sackbohrung (356) mit einer Zwischenkammer (327) zwischen der Dichtung (346) und zweiten Dichtmitteln (344, 347) verbindet, die an einem entgegengesetzten Ende (369) des ersten Kolbenteils (352) angeordnet sind, der zweite Kolbenteil (354) eine Verlängerung (353) aufweist, die sich in die Sackbohrung (356) erstreckt, die Verlängerung (353) ein Dichtglied (355) aufweist, das den Strömungsmittelstrom durch eine erste Öffnung (357) in der Verlängerung (353) steuert, die erste Öffnung (357) mit einer längs verlaufenden Öffnung (359) kommuniziert, die sich in den zweiten Kolbenteil (354) erstreckt, der zweite Kolbenteil (354) durch elastische Mittel (370) in Richtung auf die Auslaßöffnung (321) vorgespannt wird und Warnmittel (380) sich in die Zwischenkammer (327) erstrecken, um an dem ersten Kolbenteil (352) anzugreifen, so daß ein Druckausfall in der primären oder sekundären druckempfangenden Kammer (326, 328) eine Verschiebung des ersten Kolbenteils (352) hervorruft und eine Betätigung der Warnmittel (380) bewirkt, dadurch gekennzeichnet, daß die Endöffnung (351) der Sackbohrung (356) einen durchmesservergrößerten Bereich (351) aufweist, so daß eine Bewegung des Dichtgliedes (355) in den durchmesservergrößerten Bereich (351) hinein ermöglicht, daß Strömungsmitteldruck der ersten Öffnung (357) zugeführt wird, und daß der erste Kolbenteil (352) eine Außenseite besitzt, die eine umlaufende Umfangsnut (336) aufweist, wobei die Warnmittel (380) in die Nut (336) greifen.

2. Druckregelventil und Warnmittel nach Anspruch 1, bei denen die Umfangsnut (336) Anschlagmittel aufweist, die eine Schulter als Anlage für die zweiten Dichtungsmittel (344, 347) bilden.

3. Druckregelventil und Warnmittel nach Anspruch 1, mit einem Halteglied (348), das um den zweiten Kolbenteil (354) herum angeordnet ist, wobei das Halteglied (348) einen Sitz für die elastischen Mittel (370) bildet.

4. Druckregelventil und Warnmittel nach Anspruch 1, bei denen die Sackbohrung (356) in dem ersten Kolbenteil (352) und die Öffnung (319) so bemessen sind, daß die Geschwindigkeit, mit der sich die Verlängerung (353) aus der Sackbohrung (356) herausbewegt, während einer Bremsentlastungsphase reduziert ist.

5. Druckregelventil und Warnmittel nach Anspruch 1, bei denen die längsverlaufende Öffnung (359) in dem zweiten Kolbenteil (354) aus einer Bohrung (359) besteht, die von der Auslaßöffnung (321) zu der ersten Öffnung (357) verläuft.

6. Druckregelventil und Warnmittel nach Anspruch 5, bei denen die erste Öffnung (357) aus einer radialen Öffnung (357) besteht.

7. Druckregelventil und Warnmittel nach Anspruch 6, bei denen der zweite Kolbenteil (354) aus einem Stufenkolben (354) besteht, der gegenüber der Verlängerung (353) angeordnet ist, so daß die zweite Kolbenteil (354) durch Strömungsmitteldruck seitlich verschoben wird, um die Zufuhr von Strömungsmitteldruck an den ersten Dichtungsmitteln (372) vorbei aufzuteilen, wobei der erste Kolbenteil (352) bei normalem Betrieb stationär bleibt und verschoben wird, wenn der Druck der primären der sekundären druckempfangenden Kammer (326, 328) ausfällt.

## Revendications

1. Soupape de dosage (340) en combinaison avec un moyen avertisseur logée dans un alésage (313) pourvue de moyens de communication (16, 18) pour recevoir la pression du fluide transmise à l'alésage (313) ayant à une extrémité une chambre (326) recevant la pression primaire et à son autre extrémité une chambre (328) recevant la pression segondaire,la chambre (328) comprenant une ouverture de sortie (321), un piston à surface différentielle (350) disposé dans l'alésage (313) dont une première extrémité (352) est logée dans la chambre (326) recevant une première pression et dont l'autre extrémité (354) est logée dans la chambre (328) recevant la pression secondaire, la première extrémité (352) étant pourvue d'un joint (346) de manière à définir une partie de la chambre (326) recevant la pression primaire, la seconde extrémité (354) étant pourvue de joints (372) ,le piston à surface différentielle (350) comprenant une première partie (352) et une seconde partie (354),la première partie (352) comprenant un alésage borgne (356) percé d'une ouverture d'extrémité (351) à la seconde partie du piston (350), la première partie du piston (352) étant percée d'un orifice (319) faisant communiquer l'alésage borgne avec une chambre intermédiaire (327) définie entre le dit joint (346) et les moyens d'étancheité (344,347) disposés à une extrémité opposée (369) de la première partie (352) du piston,la seconde partie (354) du piston comportant un prolongement (353) se prolongeant dans l'alésage borgne (356), et étant pourvu d'un joint (355) qui commande l'écoulement du fluide à travers une première ouverture (357) du prolongement (353), la première ouverture (357) communiquant avec un orifice longitudinal (359) prévu dans la seconde partie du piston (354),la seconde partie du piston (354) étant déviée par le ressort (370) vers le dit orifice de sortie (321),et le moyen avertisseur (380) se prolongeant dans la chambre intermédiaire (327) pour engager la première partie (352) du piston, de telle sorte que le manque de pression dans l'une des chambresrecevant les pressions primaire et secondaire (326,328) provoque le déplacement de la première partie (352) du piston et actionne le dit moyen avertisseur (380),
caractérisée en ce que l'ouverture d'extrémité (351) de l'alésage borgne (256) comprend une surface de diamètre élargi (351) de telle sorte que le mouvement du joint (355) dans la dite surface de diamètre élargi (351) permet la transmission du fluide de pression à la première ouverture (357), et que la première partie de piston (352) présente extérieurement une gorge circonférentielle (336) qu'engage le moyen avertisseur (380).

2. Soupape de dosage et moyen avertisseur selon la revendication 1, dans laquelle la gorge circonférentielle (356) inclut une butée qui fournit un épaulement pour les moyens d'étancheité (344, 347).

3. Soupape de dosage et moyen avertisseur selon la revendication 1, comprenant en outre un dispositif de retenue (348) disposé autour de la seconde partie (354) du piston , assurant un siège pour le ressort (370).

4. Soupape de dosage et moyen avertisseur selon la revendication 1, dans lequel l'alésage borgne (356) dans la première partie de piston (352) et l'orifice (319) sont dimensionnés de telle sorte que la vitesse du mouvement du prolongement (353) hors de l'alésage borgne (356) est réduite pendant la phase de désserrement des freins.

5. Soupape de dosage et moyen avertisseur selon la revendication 1, dans laquelle l'ouverture longitudinale (359) à l'intérieur de la seconde partie de piston (354) est un alésage (359) s'étendant de l'ouverture de sortie (321) à la première ouverture (357).

6. Soupape de dosage et moyen avertisseur selon la revendication 5, dans laquelle la première ouverture (357) est une ouverture radiale.

7. Soupape de dosage et moyen avertisseur selon la revendication 6, dans laquelle la seconde partie (354) du piston est à surface différentielle et disposée face au prolongement (353) de telle façon que le seconde partie (354) du piston est déplacée latéralement par la pression du fluide afin de proportionner la pression du fluide au delà du premier joint (372), la première partie (352) du piston restant fixe pendant le fonctionnement normal et déplacée lorsque l'une des chambres recevant les pressions primaire et secondaire (326 328) tombe en panne.
